# EUROPEAN PATENT APPLICATION

(11) **EP 1 686 673 A1**
(43) Date of publication of application: **02.08.2006**
(21) Application number: 05001657.5
(22) Date of filing: 27.01.2005
(51) Int. Cl.: H02J 13/00

(54) **Acoustic detection of power network failures**

(71) Applicant: Hojgaard Sound IS, 2400 Copenhagen NV (DK)
(72) Inventor: Hojgaard, Benjamin, 2400 Copenhagen NV (DK); Hansen, Poul, 2400 Copenhagen NV (DK)
(74) Representative: Roerboel, Leif

(57) **Abstract**

The present invention relates to a detector for detecting a blown fuse, for instance in a transformer station. When a fuse blows, an ultrasonic signal is emitted from the fuse for a short period of time and this emitted signal is according to the invention picked up by one or more transducers in the detector device, upon which a message is transmitted to a monitoring centre indicating the event of the blown fuse and also the site of the transformer station. The transmission can take place for instance using cellular telephony. The placement of the detector device in a power installation such as a transformer station requires no modifications of the existing circuits, which would lead to a temporary shut down of the installation, and is extremely easy to carry out, thus offering a detector device which facilitates ongoing monitoring of such power installations with extremely simple means. Optionally the detector can be supplied with signals from external transducers picking up sounds or vibrations generated by other components, for instance the transformers, in the installation. By these means, malfunctioning of these components can also be detected with the detector according to the invention.

## Description

### TECHNICAL FIELD

The present invention generally belongs to the field of monitoring the proper functioning of electrical high current networks by detection of a signal emitted by components of the network and picked up by a suitable receiver and more specifically monitoring of such networks based on emission and detection of acoustic signals emitted by components of the network.

### BACKGROUND OF THE INVENTION

During resent years it has become increasingly important for high current network operators to be able to operate and service the network effectively and at low costs. In this context it is important to be able quickly and accurately to locate the site of a malfunction of the network such as blown fuses or defective transformers at the various transformer stations throughout the network. It is furthermore important to be able to distinguish between various types of malfunction at these transformer stations or other locations in the network. Consequently there arises a need for remotely monitoring such locations in networks, preferably without interference of already established networks. Furthermore, in order to ascertain maximum flexibility of such monitoring systems it is preferable that information about malfunctions be transmitted wireless to a monitoring centre.

### SUMMARY OF THE INVENTION

On the above background it is an object of the present invention to provide a method and a corresponding device and system for monitoring the correct functioning of specific components in electrical high current networks without the necessity of dismantling or interrupting portions of the network or specific components herein during implementation of said method and mounting of said device in the network. The monitoring of the network can according to the invention take place at a location remote from the specific component being monitored and according to a preferred embodiment, the transmission of information from the monitoring detector to the remote location takes place via a suitable wireless communication path, for instance via the mobile telephone network.

The method and device/system according to the present invention can in its simplest form provide information about whether a specific component in the network is functioning correctly or not, but according to more sophisticated embodiments of the invention, more detailed information about the cause of failure of the component may be transmitted to the remote location. Various exemplifying embodiments of the method and device/system according to the invention will be shown in the detailed

### description of the invention.

According to the invention, the monitoring of the component in the high current network takes place by detection of an acoustic signal generated by and emitted from this component. A failure may either be detected by a sudden or gradual occurrence of an acoustical signal of a particular kind, i.e. with certain, predetermined characteristics or by a change of an acoustic signal present during normal functioning of the component.

It should be emphasised that within the context of this invention, the term acoustic signal is understood to comprise both audible sounds, i.e. acoustic signals, the frequency range of which is confined below approximately 20 kHz, and ultrasonic signals, i.e. signals comprising frequency components above 20 kHz as well as any combinations of such signals.

Thus, according to a first aspect of the present invention there is provided a method of detection of high current network failure comprising detection of at least one acoustic signal or a change of at least one acoustic signal and subsequent evaluation of said signal by comparison with predetermined criteria and in case of a positive result of said evaluation, indicating a malfunctioning of the network, provision of an information message for transmission to a monitoring location, where the reception of said transmitted message enables the determination of the location of the site of malfunction.

According to a second aspect of the present invention there is provided a device for detecting said acoustic signal or change of acoustic signal indicating a malfunctioning in the network, said device comprising at least one transducer for picking up the acoustic signal emitted at the location of the malfunctioning and evaluation means receiving a signal provided by the transducer(s) and providing an output signal for transmission to the monitoring location.

According to a third aspect of the present invention there is provided a system for detecting high current network failure, where the system comprises at least one of said detector devices, means for transmitting signals from said at least one detector device to a monitoring centre where a determination of the location of the malfunctioning can be determined based on the signal(s) received from the detector(s).

All three aspects will be exemplified in the detailed description of the invention.

A number of advantages are attained by the method, device and system according to the present invention. Thus, the detector can be mounted on site and the monitoring system established without interruption of the network causing an interruption of the supply of current to the consumer. The detector is straightforward to mount at the fuse box and is in itself of a simple construction, which can be based on standard components. The necessary transmission of information to the monitoring centre can take place by means of mobile phones, which provides for a cost effective and flexible solution. The system provides real time information about malfunctioning of the network and this information can comprise both a simple notification of a malfunctioning (an "ON/OFF" solution) as well as more detailed information about the signal picked up by the transducers as a function of time and even the spectrum of the signal emitted from the site of malfunction. Using mobile telephony enables a simple transmission of information about the site of the malfunction, thus yielding the generation of a specific geographic location identification signal by the processor unit in the detector superfluous in this case, although such identification signals may be incorporated in case of other modes of transmission between the detector and the monitoring centre. Overall the customer service provided by the network operator is increased by the method, device and system according to the present invention.

### BRIEF DESCRIPTION OF THE FIGURES

The invention will be better understood by reference to the following figures in conjunction with the following detailed description of embodiments of the invention.
Figure 1. An exemplary system according to the invention for detecting fuse blow in a high current installation and transmitting a notification hereof to a network centre;
Figure 2. Schematic perspective view of an embodiment of the detector device according to the invention;
Figure 3. Schematic perspective view of an embodiment of the detector device according to the invention installed in a transformer station;
Figure 4. Schematic view of a fuse box with fuses and placement of the embodiment of the detector device according to the invention above the fuse box;
Figure 5. A first embodiment of an electronic circuit diagram of the detector device;
Figure 6. A second embodiment of an electronic circuit diagram of the detector device;
Figure 7. A schematic graph depicting the current through a specific fuse and the voltage across this fuse as a function of time;
Figure 8. Amplitude characteristic as a function of time of the acoustic signal emitted from the fuse during blowing of the fuse;
Figure 9. Spectrum analysis of the signal shown in figure 8; and
Figure 10. An exemplary system according to the invention employing an alternative embodiment of the detector device according to the invention.

### DETAILED DESCRIPTION OF THE INVENTION

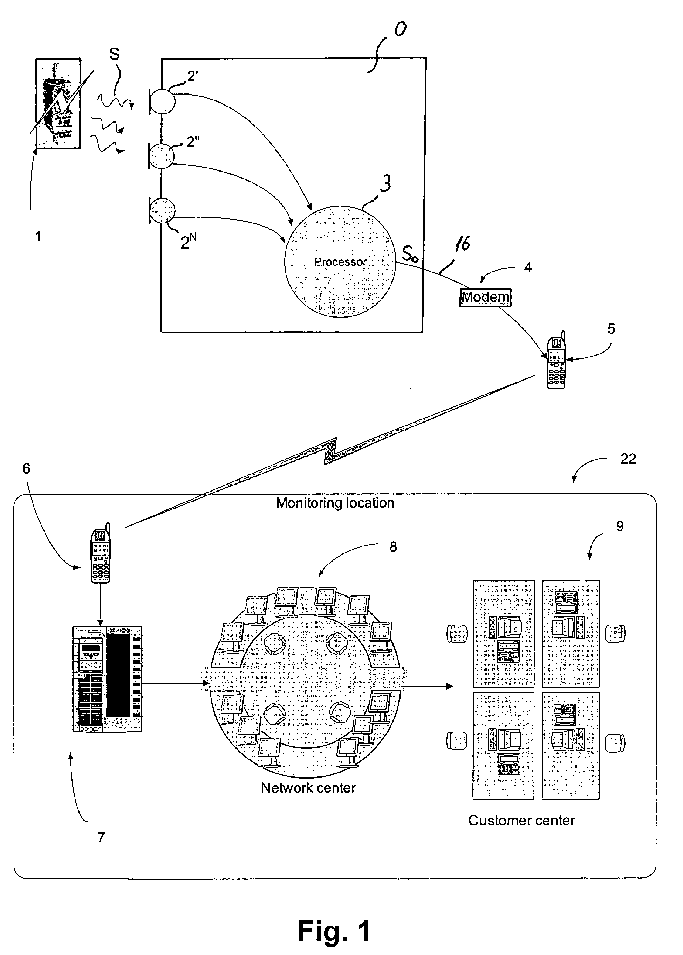

Referring to figure 1 there is shown a detector device according to the present invention generally indicated by reference numeral 0 and a system for detection of the blowing of a fuse 1 in a high current network incorporating the said device. Specifically the detector device comprises at least one transducer 2' for receiving an ultrasonic signal S emitted by the fuse 1 during and immediately after blow of the fuse 1 and for converting this ultrasonic signal to an electrical signal provided to a processor unit 3. The processor unit 3 can be provided with suitable filter means (not shown) to exclude signal components originating from other acoustic signals than the signal generated by the blown fuse, but it could also be possible to omit such filters in cases where such signals a-priory could be regarded as not interfering with the ultrasonic signal generated by the blown fuse. Also the processing means may comprise comparator means for adjusting a threshold value below which no alarm signal will be generated by the processor unit. As will be reverted to below, the processor may also comprise amplifier means for raising the level of the received signal prior to transmission of this signal to the receiving parts of the system 22, which will be described in detail below. Furthermore FFT (Fast Fourier Transform) means may be incorporated into the processor enabling transmission of the amplitude spectrum or information about its main frequency components to the receiving parts of the system.

The output signal from the processor 3 may in the most simple case solely contain information about whether a fuse has blown or not, but as mentioned above also the signal - or an amplified version of this signal - received from the transducer(s) 2', 2" ... or even the frequency spectrum or specific spectral components hereof may be provided as the output signal from the processor 3. According to the specific embodiment of the invention shown in figure 1, this signal is transmitted to the receiving station 22 by a transmission chain comprising a modem 4 coupled to a mobile telephone 5 and from this via the mobile telephone network to the receiving station (monitoring location) 22 where it is received by a mobile telephone 6. It is understood that this mode of transmission of information from the detector device to the monitoring location is only one out of many possible modes of transmission of such signals. At the monitoring location, the signal received from the detector device reaches a network centre 8 from which a suitable message is forwarded to a customer centre 9 which will contact the appropriate technician and direct him to the site of the flown fuse.

By using the mobile telephone transmission described above, identification of the site of failure can be identified at the monitoring location by a unique phone number assigned to each individual detector device of the system, but it would also be possible for instance to generate a geographical identification signal in the processor 3 and transmit this identifier together with the signal indicating fuse failure for identification of the site of failure.

According to a presently preferred embodiment of the invention, each detector device is provided with a mobile phone module characterised by said unique telephone number. In case of a malfunctioning at the detector device, the processor of the detector by utilising distinctive physical characteristics of the signal received from the transducers distinguishes between different types of malfunctions (a blown fuse, a defective fuse holder, lack of a 100 Hz signal generated by the transformer, etc.) and a different error code is assigned to each different type of malfunctioning.

A short message (SMS) is sent to the particular service provider operating the telephone connection, where the SMS contains at least the telephone number of the detector device, the error code and the time of occurrence of the malfunction. These data are stored in a database at the service provider - although the database could also be provided elsewhere, for instance at the monitoring centre itself - and the user, i.e. the operator of the monitoring centre has on-line access to the data stored in the database. An alarm signal indicating the occurrence of a malfunction somewhere in the network can if desired be elicited and all relevant data retrieved from the database.

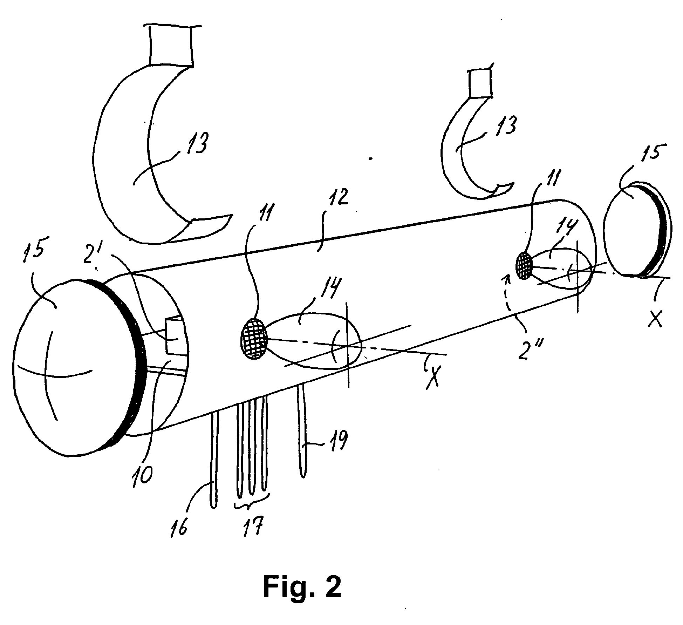

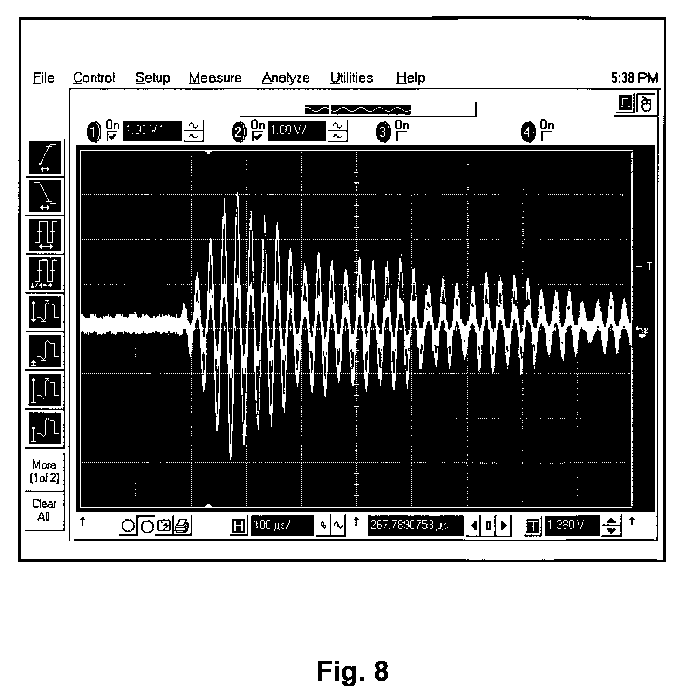

Now referring to figure 2 there is shown a perspective view of an embodiment of the detector device according to the invention. The embodiment of the detector device shown in figure 2 contains an electronic circuit board comprising various electric circuits (not shown) such as preamplifiers for amplification of the signals provided by the transducers 2', 2" prior to the processor, optional filters and comparators etc., as described above. According to this embodiment, two ultrasonic transducers 2', 2" are mounted for instance on the circuit board 10 and the sound inlets of these transducers are provided in the wall of the housing 12, which in this embodiment has the form of an elongated cylindrical housing. The sound inlets can if desired be covered with a protective screen 11, for instance to prevent the ingress of dust in the transducer. The housing 12 can for instance be hung from the ceiling of the station by wires or other attachment means such as semi-circular fasteners 13 shown schematically in figure 2. It is, however, understood that numerous other layouts of the housing and fastening means for this are possible. At either longitudinal end of the cylindrical housing 12, the housing is closed by end caps 15. Furthermore, figure 2 shows signal lines 16, 17, where 16 indicates the line carrying signals from the detector device to the modem 4 shown in figures 1 and 8, and 17 indicates a number of signal lines for inputting signals from microphones or accelerometers located at various positions in the installation as described in connection with figure 8. It is understood, however, that although figures 1, 2 and 8 indicate that the modem 4 and the communication device 5, the latter exemplified by a mobile phone, are separate units provided externally of the detector device at appropriate locations in the installation, these devices may also be incorporated into the detector device and be regarded as components of the detector device itself.

The detector device may furthermore be provided with a power supply line 19 for connection to an external power supply. Alternatively the detector device may derive its power supply from batteries in the detector device itself.

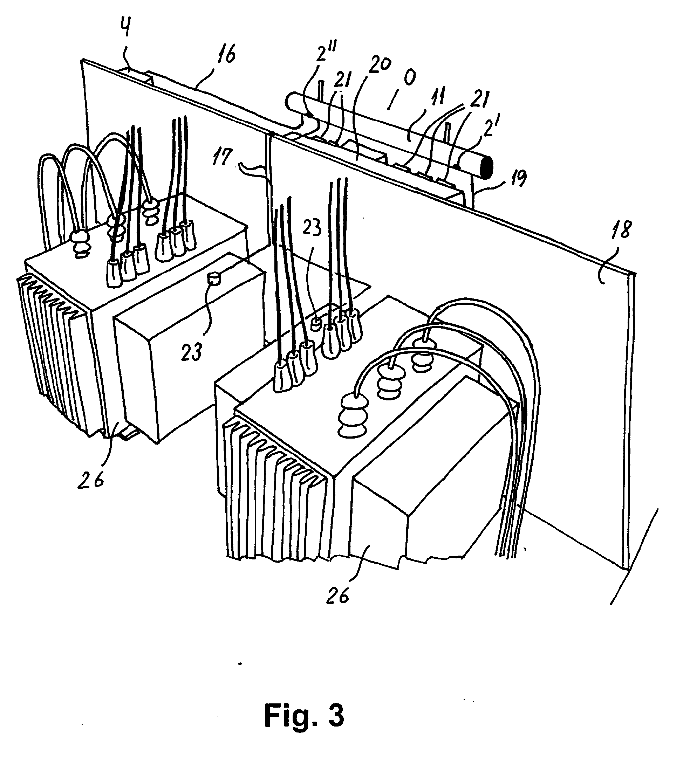

Now referring to figure 3 there is shown a schematic representation of the placement of the detector device 0 in a transformer station. The station comprises a number of transformers 26 (two in the figure). On the opposite side of a partition 18, a fuse box 20 is mounted comprising an array of fuses 21. The detector device 0 is mounted slightly above the fuse box 20 with the two transducers 2' and 2" pointing downwardly in an inclined angle towards the fuses 21. Other placements of the detector device relative to the fuse box may, however, be used with the orientation of the transducers being altered accordingly. On the transformers are placed microphones or accelerometers 23 picking up acoustic signals or vibrations for delivery to the detector device via lines 17 as explained in connection with figure 8. The detector signal is fed to a modem 4 - which may be combined with a communication device - via line 16. A power supply line 19 for the detector is connected to an external power supply.

An advantage of using more than one transducer 2', 2" ..... for picking up the ultrasonic signal emitted during blowing of a fuse is due to the fact that the directional characteristic of the ultrasonic transducers will be highly directive consisting of a pronounced main sensitivity lobe 14 in the forward direction of the longitudinal axis X through the transducer as shown in figure 2. Thus, if the detector device is positioned relatively close to an array of fuses 17, a single transducer, for instance 2', may not generate a sufficiently strong signal for eliciting an indication of fuse blow if the blown fuse is located far off the longitudinal axis X through that particular transducer 2'. This problem could at least be counteracted by placement of the detector device at a greater distance from the fuse box but it is on the other hand advantageous to place the detector device and hence the transducer as close to the fuses as possible in order to improve the signal to noise ratio. For a relatively wide array of fuses it is hence advantageous - or under circumstances even necessary - to apply at least two, but possibly even more transducers 2', 2" ... over the length of the housing of the detector device.

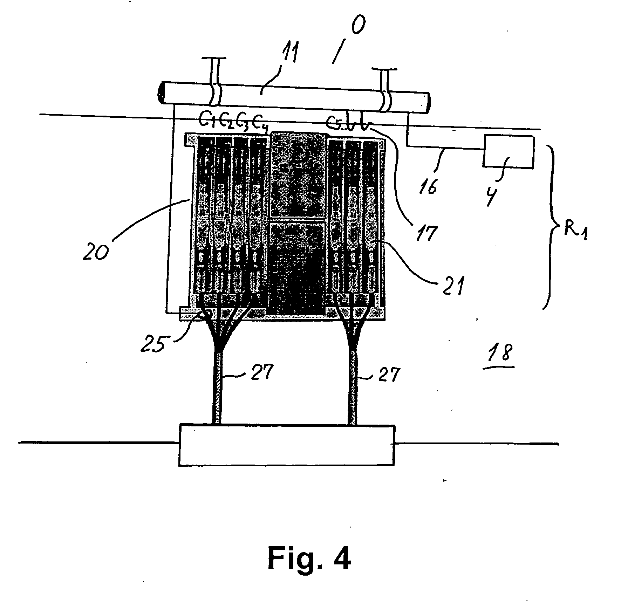

Figure 4 shows a schematic representation of the fuse box 20 and fuses 21 shown on figure 3 as seen from the other side of the partition 18. In figure 4 there is shown a total of 7 fuses corresponding to 7 columns and one row of fuses, but any number and arrangements of fuses can of course be used and as reverted to below, a 2-dimensional array of fuses may also be envisaged. It should be mentioned that in case at least two transducers be used, it becomes possible to utilise the time difference between arrival of ultrasonic signals at the transducers to determine the particular column C1, C2, C3, .... from which the signal originated. Application of two detector devices (not shown), one spanning the columns C1, C2, C3, ... and one spanning the rows R1, R2, R3, ... of fuses (only one such row - R1 - being comprised by the array of fuses shown in figure 4) may even be utilised to determine the particular fuse 17 within a total 2-dimensional array of fuses from which the ultrasonic signal originated. Thus, in the latter case, two detectors would be used, one for instance placed as shown in figures 3 and 4 and the other located vertically relative to the fuse box 20.

With reference to figure 4 there is furthermore shown the supply of power to the detector device by means of an induction coil 25 placed around one of the low voltage lines 27, but the detector device may also be provided with power from other means.

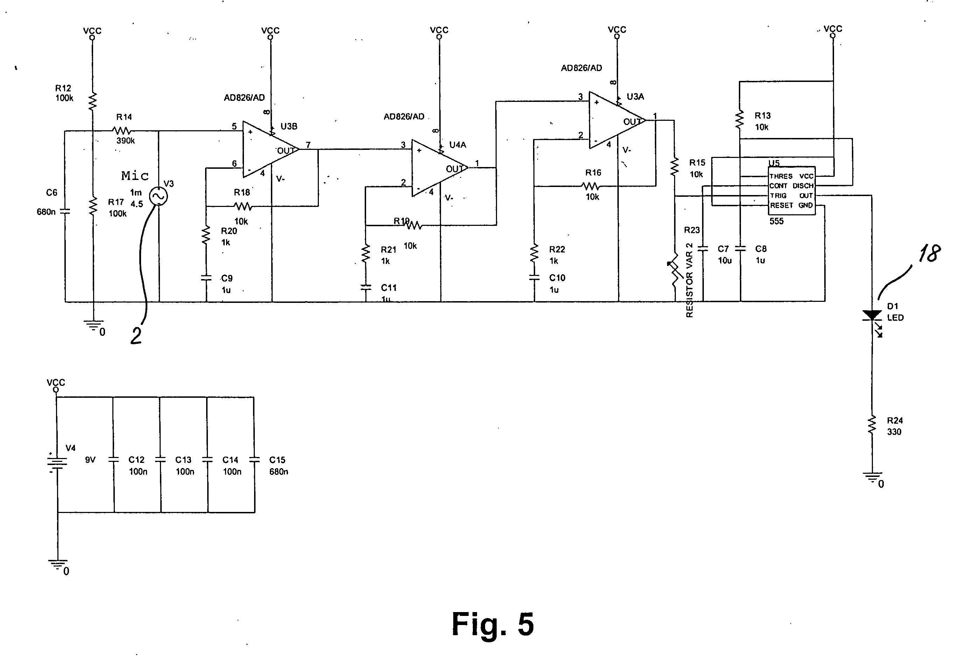

Referring now to figure 5 there is shown a circuit diagram of a first simple embodiment of the processor means 3 of the device according to the invention. In this diagram, the single transducer is represented by the voltage source V3, ref. numeral 2, and the output from the processor is provided by the multivibrator U5, the output signal of which can either attain a high or a low level. This output signal is according to the circuit shown in figure 5 used to drive a light-emitting diode (LED). Utilising this embodiment of the processor 3 in the total system shown in figure 1 would require the ON/OFF signal provided by the processor be post-processed appropriately prior to delivery to the modem for further transmission to the monitoring location.

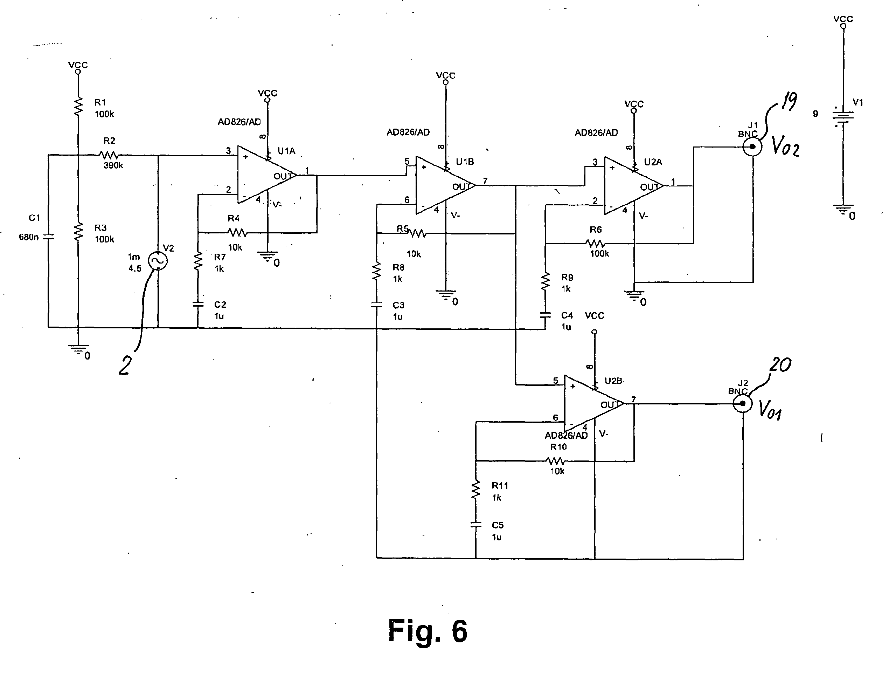

An alternative embodiment of a processor circuit for the detector according to the invention is shown in figure 6. The single transducer is represented by voltage source V2, ref. numeral 2. In this embodiment, the output signal from the processor circuit is an amplified analogue version of the signal provided by the transducer 2. In the circuit shown in figure 6, two output signals Vo1 and Vo2 are shown, the only difference being that the level of Vo2 is 20 dB higher than the level of Vo1. The output signal (Vo1 or Vo2) can either be passed on to the modem 4 without further processing and/or it can be digitised for spectrum analysis as mentioned initially.

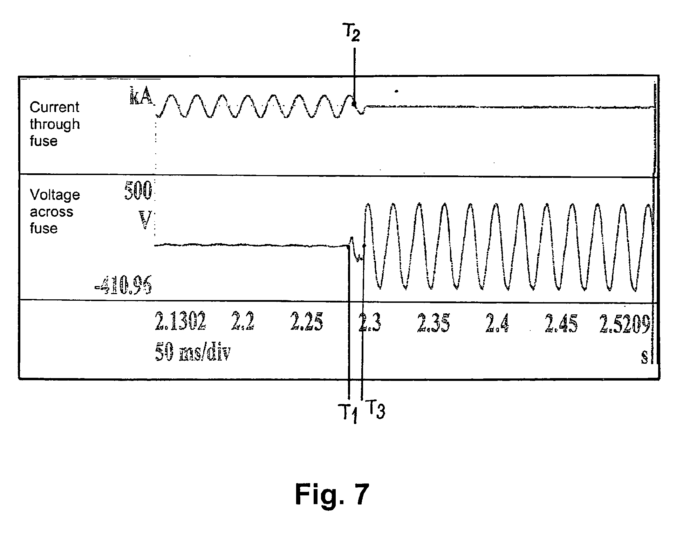

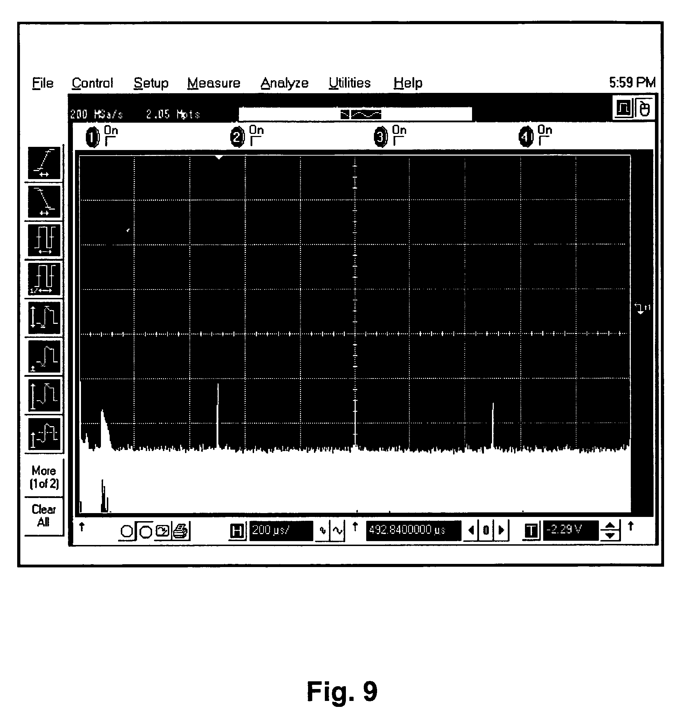

Referring to figure 7 there is as an example of fuse blow shown the current through a specific fuse and the voltage across this fuse as a function of time. At time T1 the fuse blows. Due to the reactive components of the network, the current through the fuse does not drop to zero momentarily but is in the example shown in figure 7 maintained for approximately 10 milliseconds after the last zero crossing of the current at T2. From T1 onwards a voltage is built up across the blown fuse and after the extinction of the electric arc across the blown fuse, this voltage reaches its steady state approximately at T3. In the interval between T1 and T3, the electric arc across the blown fuse is generated and maintained and during this period an ultrasonic emission takes place from the fuse. The ultrasonic signal generated by the blown fuse and amplified in the processor circuit shown in figure 6 is shown in figure 8, the ultrasonic signal exhibiting a fundamental frequency of approximately 50 kHz. The corresponding spectrum analysis is shown in figure 9.

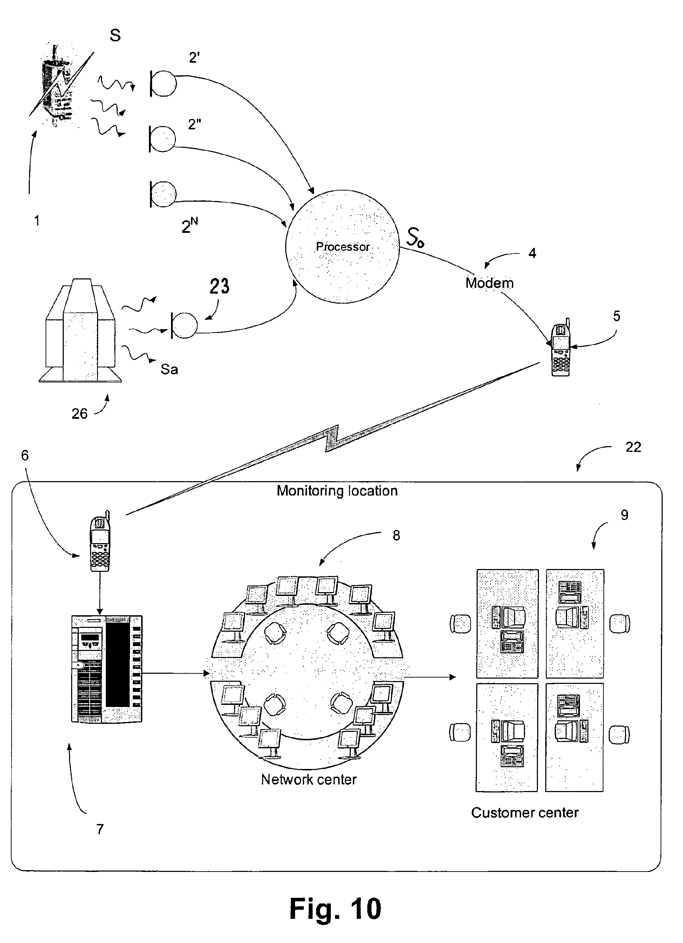

Now referring to figure 10 there is shown an alternative and extended embodiment of the detector device according to the present invention. Elements corresponding to those of the embodiment of figure 1 are referred to by the same reference numerals and will not be explained again. In addition to the ultrasonic transducers 2', 2" ..., the embodiment of a detector shown in figure 10 also comprises at least one microphone 23 connected to the processor 3 for detection of an acoustic signal Sa generated by and emitted from the transformer 26 at the transformer station. During normal steady state operation of the network, the transformer will emit a sound signal with a fundamental frequency of for instance 100 Hz and a pattern of overtones and the levels of these frequency components will change in case of malfunctioning of the transformer and/or associated network. Thus, further valuable information can be picked up and transmitted to the monitoring centre by application of this embodiment of the invention.

As an alternative to the application of one or more microphones described above, it would also be possible to use one or more accelerometers or other vibration sensitive components to detect malfunctioning of the transformer.

## Claims

1. A method of detection of high current network failure comprising detection of a least one acoustic signal or a change of at least one acoustic signal and subsequent evaluation of said signal by comparison with predetermined criteria and in case of a positive result of said evaluation, indicating a malfunctioning of the network, provision of an information message for transmission to a monitoring location, where the reception of said transmitted message enables the determination of the location of the site and/or type of malfunction.

2. A method according to claim 1, **characterised in that** at least one of said acoustic signals is an ultrasonic signal generated when at least one fuse in said high current network blows.

3. A method according to claim 1, **characterised in that** said transmission takes place via a mobile telephone network.

4. A method according to claim 3, **characterised in that** said information message is an SMS message.

5. A method according to claim 1, 2, 3 or 4, **characterised in that** said information message comprises a code designating the geographical location of the detector device.

6. A method according to claim 5, **characterised in that** said information message comprises an error code indicating the type of malfunction and the time of occurrence of the malfunction.

7. A method according to claim 6, **characterised in that** said type of malfunction comprises blown fuses, defective fuse holders and transformer or other circuit component malfunctions, where the latter results in a lack of a low frequency acoustic or vibration signal emitted or generated by a transformer or other component at the location of the detector device.

8. A method according to claim 1, **characterised in that** said information message is stored at a database.

9. A method according to claim 1, **characterised in that** the detection of a malfunction elicits an alarm signal at the monitoring location.

10. A device for detecting one or more acoustic signals or a change of said one or more acoustic signals indicating a malfunctioning in a high current network, said device comprising at least one transducer (2, 2', 2",...; 23) for picking up said acoustic signals emitted at locations of the malfunctioning and processor means (3) receiving a signal provided by each of said transducers and providing an output signal (So) for transmission to a monitoring location (22).

11. A device according to claim 10, **characterised in that** at least one of said acoustic signals is an ultrasonic signal generated when at least one fuse in said high current network blows.

12. A device according to claim 10, **characterised in that** at least one of said acoustic signals is an ultrasonic signal.

13. A device according to claim 10, 11 or 12, **characterised in that** at least one of said transducers is a directional transducer.

14. A device according to claim 10, **characterised in that** said processor means (3) upon reception of a signal from at least one of said transducers generates an output signal (So).

15. A device according to claim 10, **characterised in that** said processor means (3) comprises means for distinguishing between ultrasonic emissions indicating blown fuses or defective fuse holders and low frequency emitted/generated signals or interruptions of these signals, for instance indicating malfunction of transformers or other circuit components.

16. A device according to claim 10, **characterised in that** the device is provided with means for receiving signals from one or more external transducers (23) indicating malfunctioning of circuit components or transformers (26).

17. A device according to claim 16, **characterised in that** said external transducers (23) belong to the group comprising microphones and accelerometers.

18. A device according to claim 10, **characterised in that** said processor means (3) comprises timing means for indicating the time of occurrence of a malfunction.

19. A device according to claim 10, **characterised in that** said processor means (3) comprises means for generating a code designating the geographical location of the detector device.

20. A system for detecting high current network failure, where the system comprises at least one detector device for detecting one or more acoustic signals and/or vibrations or a change of said one or more acoustic signals and/or vibrations indicating a malfunctioning in the network and means for transmitting signals from said at least one detector device to a monitoring centre where a determination of the location and type of the malfunctioning can be determined based on signal(s) received from the detector(s).

21. A system according to claim 20, **characterised in that** at least one of said acoustic signals is an ultrasonic signal generated when at least one fuse in said high current network blows.

22. A system according to claim 20, **characterised in that** said means for transmitting comprises a modem receiving signals from the one or more detector devices and for providing signals for transmission to said monitoring centre via a communication device.

23. A system according to claim 20, 21 or 22, **characterised in that** said transmission is a wireless transmission.

24. A system according to claim 23, **characterised in that** said wireless transmission is a mobile telephone transmission.

25. A system according to claim 20 comprising one or more external transducers (23) for receiving signals indicating malfunctioning of circuit components and/or transformers (26).
